# EUROPEAN PATENT SPECIFICATION

(11) **EP 2 571 933 B1**
(45) Date of publication and mention of the grant of the patent: **02.11.2016**
(21) Application number: 11718738.5
(22) Date of filing: 10.05.2011
(51) Int. Cl.: C08L 23/14, C08J 5/18, C08L 23/08, C08L 23/16

(54) **PROPYLENE POLYMER COMPOSITIONS**
PROPYLENPOLYMERZUSAMMENSETZUNGEN
COMPOSITIONS DE POLYMÈRE DE PROPYLÈNE

(30) Priority: 20.05.2010 EP 10163355; 27.05.2010 US 396478 P
(43) Date of publication of application: 27.03.2013
(73) Proprietor: Basell Poliolefine Italia S.r.l., 20127 Milano (IT)
(72) Inventor: MASSARI, Paola, I-44121 Ferrara (IT); CIARAFONI, Marco, I-44123 Ferrara (IT); CAPUTO, Tiziana, I-44121 Ferrara (IT)
(74) Representative: Sacco, Marco
(86) International application number: PCT/EP2011/057475
(87) International publication number: WO 2011/144489

(56) References cited:
- WO-A1-03/046021
- WO-A1-2006/119901
- WO-A1-2009/019277

## Description

The present invention relates to a propylene polymer composition having an optimum balance of properties in particular an improved balance of mechanical properties and excellent physical properties.

The propylene polymer composition of the present invention is particularly suitable for the production of injection moulded articles and films. For this particular application is very needed good flexibility and softness combined with high impact strength and good transparency.

As is known, the isotactic polypropylene is endowed with an exceptional combination of excellent properties which render it suitable for a very great number of uses. In order to improve said properties into the propylene stereoregular homopolymerization process have been introduced one or more copolymerization steps or one or more monomer have been introduced in the homopolymer matrix.

WO 2005/014713 discloses a propylene polymer composition comprising:
A) 65-95 %wt of a crystalline propylene polymer selected from propylene homopolymer and random polymer of propylene with 0.1-10 %wt of an α-olefin selected from ethylene, a C₄-C₁₀ α-olefin and a mixture thereof, the said polymer being insoluble in xylene at ambient temperature in an amount over 85 %wt and having a polydispersity index ranging from 4 to 13, and an intrinsic viscosity value over 2.2 dl/g; and
B) 5-35 %wt of an elastomeric olefin polymer of ethylene with a C₃-C₁₀ α-olefin and optionally a diene, having an ethylene content ranging from 15 to 85%, preferably from 35 to 60 %wt and an intrinsic viscosity ([η]) value of at least 1.4 g/ml, preferably from 2.5 to 5 g/ml.

The ratio of the intrinsic viscosity value of crystalline polymer (1) to that of elastomeric polymer (2) ranges from 0.45 to 1.6.

The above composition shows a Flexural Modulus value of 1600 MPa or higher and is particularly suitable to produce non-pressure pipes and fittings.

WO 03/046021 relates to a propylene polymer composition, comprising:
A) from 50 to 90 %wt of one or more propylene copolymer(s) selected from the group consisting of (Al) random copolymers of propylene with ethylene containing from 1 to 7 %wt, of ethylene; (A2) copolymers of propylene with one or more C₄-C₈ α-olefins containing 2-10 %wt of the C₄-C₈ alpha-olefin(s); (A3) copolymers of propylene with ethylene and one or more C₄-C₈ alphaolefin(s) containing 0.5-5 %wt of ethylene and 2-6 %wt of C₄-C₈ α-olefins; and
B) from 10 to 50 %wt of a copolymer of propylene containing from 8 to 40 %wt of ethylene and optionally 1-10 %wt of a C₄-C₈ α-olefins.

Said composition is said to have good flexibility, good impact properties and good transparency. Thus the applicant found a specific composition able to improve the quality of the injection moulded articles in terms of mechanical and physical properties, in particular in terms of softness.

It is an object of the present invention to provide a propylene polymer composition having improved properties in terms of softness and impact resistance.

It is a further object of the present invention to provide injection moulded articles and films with improved mechanical properties and improved quality.

The propylene polymer composition according to the present invention comprises:
A) 70-94 %wt, preferably 80-94 %wt, more preferably 82-92 %wt, even more preferably 85-90 %wt, of a propylene-ethylene copolymer comprising from 3.1 to 4 %wt of ethylene derived units; and
B) 6-30 %wt, preferably 6-20 %wt, more preferably 8-18 %wt even more preferably 10-15 %wt of a second propylene-ethylene copolymer comprising from 41 to 55 %wt; even more preferably from 45 to 55 %wt of ethylene derived units;
   said propylene polymer composition having a MFR L (Melt Flow Rate according to ISO 1133, condition L, i.e. 230°C and 2.16 kg load) from 0.1 to 5 g/10 min, in particular from 0.1 to 3 g/10 min.; more preferably from 0.1 to 1 g/10 min, and an Intrinsic Viscosity of the fraction soluble in xylene [XSIV] at room temperature: from 2 to 4 dl/g ; even more preferably from 2 to 3 dl/g.

From the above definitions it is evident that the term "copolymer" includes polymers containing only two kinds of comonomers.

The Intrinsic Viscosity of the fraction soluble in xylene [XSIV] can be considered as the Intrinsic Viscosity of the component B) being the latter completely soluble in xylene.

Other preferred features for the compositions of the present invention are:
- The compositions of the present invention present at least one melt peak, determined by way of DSC (Differential Scanning Calorimetry), at a temperature ranging from 130 to 150°C, preferably from 140 to150 °C, more preferably from 145 to 150 °C.
- The total content of ethylene with respect to the weight of the overall composition measured by NMR ranges from 7 to 15 %wt, preferably from 8 to 12 %wt, more preferably from 8 to 9 %wt. Moreover, the compositions of the present invention preferably are endowed with some or all these properties:
- a Flexural Modulus is comprised between 300 MPa and 600 MPa, preferably between 300 and 500 MPa, more preferably between 400 and 500 MPa;
- Izod Impact Strength measured at 23°C higher than 40 kJ/m², preferably comprised between 50 and 90 kJ/m², even more preferably comprised between 70 and 90 kJ/m².
- Izod impact strength measured at 0°C higher than 10 kJ/m², preferably comprised between 30 and 60 kJ/m².
- Izod impact strength measured at -20°C higher than 8 kJ/m², preferably comprised between 12 and 30 kJ/m²;
- A total number of fish eyes on 50 µm cast films less than 2800, preferably less than 100.

According to a preferred embodiment, the propylene polymer composition is produced by a gas-phase polymerization process carried out in at least two interconnected polymerization zones. Said polymerization process is described in the European patent EP 782587.

The process is carried out in a first and in a second interconnected polymerization zone to which propylene and ethylene are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer. Preferably, the polymerization process is carried out in presence of a highly stereospecific heterogeneous Ziegler-Natta catalyst. The Ziegler-Natta catalysts suitable for producing the propylene polymer compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I): 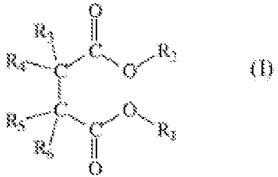
wherein the radicals R¹ and R², equal to or different from each other, are a C₁-C₂₀ linear or branched alkyl, alkenyl, cycloalkyl, aryl, arylalkyl or alkylaryl group, optionally containing heteroatoms belonging to groups 15-17 of the periodic table; the radicals R³ to R⁶ equal to or different from each other, are hydrogen or a C₁-C₂ linear or branched alkyl, alkenyl, cycloalkyl, aryl, arylalkyl or alkylaryl group, optionally containing heteroatoms, and the radicals R³ to R⁶ which are joined to the same carbon atom can be linked together to form a cycle.
R¹ and R² are preferably C₁-C₈ alkyl, cycloalkyl, aryl, arylalkyl and alkylaryl groups.

Particularly preferred are the compounds in which R¹ and R² are selected from primary alkyls and in particular branched primary alkyls. Examples of suitable R¹ and R² groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R³ to R⁵ are hydrogen and R⁶ is a branched alkyl, cycloalkyl, aryl, arylalkyl and alkylaryl radical having from 3 to 10 carbon atoms. Another preferred group of compounds within those of formula (I) is that in which at least two radicals from R³ to R⁶ are different from hydrogen and are selected from C₁-C₂₀ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is R³ and R⁵ or R⁴ and R⁶ are particularly preferred.

According to a preferred method, the solid catalyst component can be prepared by reacting a titanium compound of formula Ti(OR)_{n-y}X_{y} where n is the valence of titanium and y is a number between 1 and n, preferably TiC4, with a magnesium chloride deriving from an adduct of formula MgCl₂·pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0 °C); the mixture is heated up to 80-130 °C and kept at this temperature for 0.5-2 hours. The treatment with Tic4 can be carried out one or more times. The internal donor can be added during the treatment with TiCl₄ and the treatment with the electron donor compound can be repeated one or more times. Generally, the succinate of formula (I) is used in molar ratio with respect to the MgC12 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 m21g and preferably between 50 and 400 m21g, and a total porosity (by B.E.T. method) higher than 0.2 cm31 g preferably between 0.2 and 0.6 cm31g. The porosity (Hg method) due to pores with radius up to 10.000A generally ranges from 0.3 to 1.5 cm31 g, preferably from 0.45 to 1 cm31g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Rₐ⁵R_{b}⁶Si(OR⁷)_{c} where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 , trifluoropropyl-2-ethylpiperidinyl-dimethoxysilane and 1,1,1 ,trifluoropropyl-metildimethoxysilane. The external electron donor compound is used in such an amount to give a molar ratio between the organo-aluminum compound and said electron donor compound of from 0.1 to 500.

The propylene polymer compositions of the present invention may further comprise additives commonly employed in the polyolefin field, such as antioxidants, light stabilizers, nucleating agents, antiacids, colorants and fillers.

The main application of the propylene polymer compositions of the invention is the production of moulded articles, particularly injection-moulded items, more particularly lids. The injection-moulded articles comprising the propylene polymer compositions of the invention have good flexibility and good impact properties and are also endowed with good transparency.

The following examples are given to illustrate and not to limit the present invention.

### Examples

The data of the propylene polymer materials were obtained according to the following methods:

### Xylene-soluble fraction at room temperature (25°C

2.5 g of polymer and 250 mL of o-xylene are introduced in a glass flask equipped with a refrigerator and a magnetical stirrer. The temperature is raised in 30 minutes up to the boiling pint of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and the filtered liquid is divided into two 100 ml aliquots. One 100 ml aliquots of the filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

### Ethylene (C2) content

The polymer microstructure was investigated by ¹³C-NMR analysis. The samples were dissolved with a 8% wt/v concentration in 1,1,2,2-tetrachloroethane-d₂ at 120 °C. The ¹³C-NMR spectra were acquired at 120°C on a Bruker AV600 spectrometer operating at 150.91 MHz. Each spectrum was acquired with a 90° pulse, 15 seconds of delay between pulses and CPD (bi_WALTZ 65_64_pl) to remove ¹H-¹³C coupling. About 1500 transients were stored in 32K data points using a spectral window of 9000 Hz. The Sδδ peak at 29.90 ppm (nomenclature according to reference 3) was used as internal reference.

Assignments were made according to Randall[1], triad distribution and copolymer compositions were determined according to the method proposed by Kakugo.[2]
[1] J. C. Randall, Macromol. Chem Phys. 1989, C29, 201.
[2] M. Kakugo, Y. Naito, K. Mizunuma, T. Miyatake, Macromolecules 1982, 15, 1150.
[3] C. J. Carman, R. A. Harrington, C. E. Wilkes, Macromolecules 1977, 10, 535.

### Molar ratio of feed gasses

Determined by gas-chromatography.

### Melt flow rate (MFR)

Determined according to IS0 1133 (230°C, 2.16 Kg).

### Intrinsic viscosity of the Xylene Soluble fraction (XSIV)

Determined in tetrahydronaphthalene at 135°C.

### Flexural modulus

Determined according to IS0 178.

### IZOD Impact Strength

Determined according to IS0 18011A.

### Melting temperature and crystallization temperature

Determined by DSC with a temperature variation of 20°C per minute. Sample 5 mg.

The melting points of the polymers *(Tₘ)* were measured by Differential Scanning Calorimetry (DSC) on a Perkin Elmer DSC-7 calorimeter equipped with Pyris 1 software, in the Solid State Properties (FE-PPC) laboratory, previously calibrated at indium and zinc melting points with particular attention in determining the baseline with required accuracy. The preparation of the samples, for calorimetric investigations, has been performed by cutting them into small pieces by using a cutter. The weight of the samples in every DSC crucible was kept at 5.0 ± 0.5 mg.

The weighted sample was sealed into aluminum pans and heated to 180°C at 20°C/minute. The sample was kept at 180°C for 5 minutes to allow a complete melting of all the crystallites, then cooled to 20°C at 20°C/minute. After standing 2 minutes at 20°C, the sample was heated for the second time to 180°C at 10°C/min. In this second heating run, the peak temperature was taken as the melting temperature (Tₘ).

### Fish eyes on 50 µm cast films

Preparation of the cast film specimens: Films with a thickness of 50 µ were prepared by extruding each polymer composition in a single screw Collin extruder (length/diameter ratio of screw: 30) at a film drawing speed of 7 m/min and melt temperature of 210-250 °C.

The fish eyes were determined on the film specimens prepared as described above. The films are then inspected by means of an optical device (Matrix or Line CCD cameras). Film defects are counted in accordance to their dimension.

### Examples 1-2

The Ziegler-Natta catalyst was prepared according to the Example 5, lines 48-55 of the European Patent EP728769. Triethylaluminium (TEA) was used as co-catalyst and dicyclopentyldimethoxysilane as external donor, with the weight ratios indicated in Table 1.

The above catalyst system is then transferred into a reactor containing an excess of liquid propylene and propane to carry out pre-polymerization at 25° C for 11 minutes before introducing it into a polymerization reactor.

In the polymerization reactor the propylene polymer compositions are produced by feeding in a continuous and constant flow the prepolymerized catalyst system, hydrogen (used as molecular weight regulator), propylene and ethylene in the gas state.

The propylene polymer compositions of the examples were prepared in a single gas-phase polymerization reactor comprising two interconnected polymerization zones, a riser and a downcomer, as described in the European Patent EP782587 and WO00/02929.

The polymer particles exciting from the reactor were introduced in an extruder, wherein they are mixed with 1500 ppm of Irganox B 225 (made of 1 part of Irganox 1010 and 1 part of Irgafos 168) and 500 ppm of Ca stearate. The previously said Irganox 1010 is pentaerytrityl tetrakis 3-(3,5-ditert-butyl-4-hydroxyphenyl) propanoate, while Irgafos 168 is tris (2,4-di-tert-butylphenyl) phosphite, both marketed by Ciba-Geigy. The polymer particles were extruded under nitrogen atmosphere in a twin screw extruder, at a rotation speed of 250 ppm and a melt temperature of 200-250° C.

The process parameters of the polymerization process are indicated in Table 1.

**Table 1**

| | **Example 1** | | **Example 2** | |
|---|---|---|---|---|
| **PRECONTACT** | | | | |
| Temperature, °C | 15 | | 15 | |
| Residence time, min | 13 | | 13 | |
| TEA/CAT, g/g | 5 | | 5 | |
| TEA/Ext. Donor, g/g | 4 | | 4 | |
| **PREPOLYMERIZATION** | | | | |
| Temperature, °C | 25 | | 25 | |
| Residence time, min | 11 | | 11 | |
| **POLYMERIZATION** | | | | |
| Temperature, °C | 65 | | 65 | |
| Pressure, barg | 22 | | 22 | |
| | riser | downcomer | riser | downcomer |
| C3-, mole% | 63.6 | 86.1 | 63.5 | 85.5 |
| C2-, mole% | 9.1 | 0.82 | 8.13 | 0.78 |
| H₂/C₃⁻, mol ratio | 0.015 | 0.002 | 0.019 | 0.002 |

### Comparative Example 1

The propylene polymer composition of the comparative example 1 is the composition according to the example 3 of WO 03/046021.

Table 2 shows the properties measured on the propylene polymer compositions of the examples 1-2 and of the comparative example 1.

**Table 2**

| **Example** | **1** | **2** | **Comparative Ex. 1** |
|---|---|---|---|
| **Properties of the Copolymer A** | | | |
| C2 content in A, wt% | 3.5 | 3.3 | 4 |

| **Properties of Copolymer B** | | | |
|---|---|---|---|
| C2 content in B, wt% | 50.4 | 46.3 | 26 |

| **Properties of the Total composition** | | | |
|---|---|---|---|
| | 87 | 87 | 76 |
| Copolymer A content, wt% Copolymer B content, wt% | 13 | 13 | 24 |
| C2 total content, wt% | 9.6 | 8.9 | 9.3 |
| MFR of the composition, g/10 min | 0.48 | 0.40 | 0.97 |
| XS, wt% | 30 | 27.1 | 28.8 |
| XSIV, dl/g | 2.69 | 2.35 | 1.58 |
| Melting Temperature, °C | 142.2 | 147.1 | 147.5 |
| Crystallization Temp, °C | 95.3 | 98.2 | 101.5 |
| Flexural modulus, MPa | 395 | 475 | --- |
| Izod Impact Resistance, at 23°C, KJ/m² | 70.4 | 74 | 3.6 |
| Izod Impact Resistance, at 0°C, KJ/m² | 48.5 | 43 | --- |
| Izod Impact Resistance, at -20°C, KJ/m² | 18 | | 3.6 |
| **Gels characterization on cast film 50 µm** | | | |
| Fish eyes diam. ≥ 0.2 mm, nr/m² | 2650 | 40 | --- |
| Fish eyes diam. 0.5-0.7 mm, nr/m² | 12 | 14 | --- |
| Fish eyes diam. 0.7-1.5 mm, nr/m² | 2 | 1 | --- |
| Fish eyes diam. 1.5-2.5 mm, nr/m² | 0 | 0 | --- |
| Fish eyes diam. ≥ 2.5 mm, nr/m² | 0 | 0 | --- |

| | | | |
|---|---|---|---|
| C2= ethylene content | | | |

By comparing comparative example 1 with the examples of the present invention it is clear that the Izod Impact Resistance is greatly improved when the parameters of the present invention are fulfilled.

## Claims

1. A propylene polymer composition comprising:
A) 70-94 %wt of a propylene-ethylene copolymer comprising from 3.1 to 4 %wt of ethylene derived units; and
B) 6-30 %wt of a second propylene-ethylene copolymer comprising from 41 to 55 %wt of ethylene derived units;
said propylene polymer composition having a MFR L (Melt Flow Rate according to ISO 1133, condition L, i.e. 230°C and 2.16 kg load) from 0.1 to 5 g/10 min, and an Intrinsic Viscosity of the fraction soluble in xylene [XSIV] at room temperature from 2 to 4 dl/g.

2. The propylene polymer composition according to claim 1 having a Flexural Modulus comprised between 300 MPa and 500 MPa.

3. A film comprising a propylene polymer composition according to any of claims 1 to 2.

4. A moulded article comprising a propylene polymer composition according to any of claims 1 to 2.

## Patentansprüche

1. Propylenpolymerzusammensetzung, umfassend:
A) 70-94 Gew.% eines Propylen-Ethylen-Copolymers, das 3,1 bis 4 Gew.% von Ethylen abgeleitete Einheiten umfasst; und
B) 6-30 Gew.% eines zweiten Propylen-Ethylen-Copolymers, das 41 bis 55 Gew.% von Ethylen abgeleitete Einheiten umfasst;
wobei die Propylenpolymerzusammensetzung eine MFR L (Schmelzfließrate gemäß ISO 1133, Bedingung L, d. h. 230 °C und 2,16 kg Last) von 0,1 bis 5 g/10 min und eine Grenzviskosität der in Xylol löslichen Fraktion [XSIV] von 2 bis 4 dl/g bei Raumtemperatur aufweist.

2. Propylenpolymerzusammensetzung nach Anspruch 1 mit einem Biegemodul, der zwischen 300 MPa und 500 MPa liegt.

3. Folie, umfassend eine Propylenpolymerzusammensetzung nach einem der Ansprüche 1 bis 2.

4. Geformter Gegenstand, umfassend eine Propylenpolymerzusammensetzung nach einem der Ansprüche 1 bis 2.

## Revendications

1. Composition de polymère de propylène, comprenant :
A) 70-94% en poids d'un copolymère de propylène-éthylène comprenant 3,1 à 4% en poids d'unités dérivées d'éthylène ; et
B) 6-30% en poids d'un deuxième copolymère de propylène-éthylène comprenant 41 à 55% en poids d'unités dérivées d'éthylène ;
ladite composition de polymère de propylène présentant un MFR L (indice de fluidité à chaud - Melt Flow Rate - selon la norme ISO 1133, condition L, c'est-à-dire à 230°C et à une charge de 2,16 kg) de 0,1 à 5 g/10 min et une viscosité intrinsèque de la fraction soluble dans le xylène [XSIV] à température ambiante de 2 à 4 dl/g.

2. Composition de polymère de propylène selon la revendication 1, présentant un module de flexion compris entre 300 MPa et 500 MPa.

3. Film comprenant une composition de polymère de propylène selon l'une quelconque des revendications 1 à 2.

4. Objet moulé comprenant une composition de polymère de propylène selon l'une quelconque des revendications 1 à 2.
